Europäisches Patentamt

European Patent Office

Office européen des brevets

(19)

(11) Numéro de publication : **0 120 729**
**B1**

(12) **FASCICULE DE BREVET EUROPÉEN**

(45) Date de publication du fascicule du brevet :
27.07.88

(51) Int. Cl.⁴ : **G 06 K 7/10**, **B 65 G 61/00**,
**G 06 F 15/24**, **G 06 K 19/06**

(21) Numéro de dépôt : **84400305.3**

(22) Date de dépôt : **15.02.84**

(54) **Procédé et dispositif de détection de la position d'objets stockés sur palettes, support de repères de position et ensemble de détection comprenant un tel dispositif et de tels supports.**

(30) Priorité : **25.03.83 FR 8304992**

(43) Date de publication de la demande :
**03.10.84 Bulletin 84/40**

(45) Mention de la délivrance du brevet :
**27.07.88 Bulletin 88/30**

(84) Etats contractants désignés :
**BE CH DE GB IT LI NL**

(56) Documents cités :
**FR-A- 2 410 254**
**US-A- 3 586 176**
**US-A- 3 884 363**
**US-A- 3 958 102**
**US-A- 3 983 373**
**US-A- 4 019 026**
**US-A- 4 065 343**

(73) Titulaire : **L'OREAL**
**14, Rue Royale**
**F-75008 Paris (FR)**

(72) Inventeur : **Gassmann, Max**
**12, Route de Saint-Nom**
**F-78620 L'etang la Ville (FR)**

(74) Mandataire : **Peuscet, Jacques et al**
**Cabinet Peuscet 68, rue d'Hauteville**
**F-75010 Paris (FR)**

Jouve, 18, rue St-Denis, 75001 Paris, France

## Description

La présente invention concerne un procédé et un dispositif d'identification d'une face de référence d'objets parallélépipédiques et à la détection de la position desdits objets stockés sur palettes. L'invention se rapporte plus particulièrement aux objets parallélépipédiques sur des palettes de stockage, ces objets étant destinés à être transférés, par un dispositif automatique, de la (ou des) palette(s) sur laquelle (ou lesquelles) ils sont stockés sur au moins un autre réceptacle, tel qu'au moins une autre palette, ayant éventuellement des dimensions différentes, réceptacle sur lequel les objets doivent être disposés et/ou assortis d'une manière différente.

US-A-4 065 343 divulgue une bande d'information qui est fixée sur des bagages, c'est-à-dire des objets parallélépipédiques, de manière à permettre la lecture d'informations que le bagage soit debout, ou couché sur l'une ou l'autre de ses faces principales. Autrement dit, la bande d'information peut être lue sur trois côtés d'un objet.

FR-A-2 410 254 divulgue un gonio-télémètre optique selon lequel la distance d'un objet, tel qu'un pétrolier, à un point de référence, est mesurée de la manière suivante :

— on balaie une distance de référence prédéterminée avec un faisceau lumineux émis par une source qui est déplacée à vitesse angulaire constante,

— on mesure la durée du balayage de la distance de référence, et

— on calcule la distance qui sépare la source de l'objet en fonction de la distance de référence, de la vitesse constante du balayage et de la durée mesurée.

On sait, par ailleurs, que de tels procédés et dispositifs sont respectivement mis en œuvre et utilisés notamment pour automatiser la formation de palettes, dont chaque couche est constituée d'objets parallélépipédiques identiques entre eux, en ce qui concerne au moins leur forme extérieure et leurs dimensions, mais de préférence également en ce qui concerne leur nature, et telles que les objets d'une couche donnée sont différents des objets de la ou des couches adjacentes, au moins dans leur nature, et de préférence en présentant la même forme et les mêmes dimensions d'une couche à l'autre, de telles palettes étant formées par le transfert des objets à partir de palettes de stockage homogènes sur chacune desquelles les objets sont identiques non seulement par couche mais également d'une couche à l'autre, dans leur forme, leurs dimensions et leur nature.

De tels dispositifs de détection de la position des objets sur leur palette de stockage sont combinés à des dispositifs automatiques de transfert, tels que des palettiseurs automatiques, dans des installations de préparation de commandes au sol, en vue de permettre la distribution d'articles ou de produits depuis des centres de production ou de stockage vers différentes surfaces de vente.

Les objets transférés sont le plus souvent dans ce cas des boîtes d'emballage parallélépipédiques relativement rigides, par exemple en carton, dans lesquelles sont conditionnés un ou plusieurs articles. Les palettiseurs automatiques qui transfèrent de tels objets d'une palette à une autre se présentent sous la forme de robots mobiles, destinés à se déplacer le long de palettes homogènes de stockage alignées en rangées ; ces robots sont munis chacun d'au moins un bras manipulateur, dont l'extrémité est équipée d'un dispositif de préhension, par exemple à pinces ou à ventouses, qui doit être convenablement déplacé et orienté par rapport à l'objet à manipuler afin de pouvoir saisir ce dernier dans la position qui est la sienne sur la palette de stockage correspondante, puis de le transférer et de le déposer convenablement sur une autre palette, de sorte qu'il constitue sur cette dernière, avec d'autres objets identiques antérieurement et/ou postérieurement transférés, une couche homogène.

Compte-tenu des positions et orientations différentes des différents objets d'une même couche et/ou des objets des différentes couches d'une palette, le bon fonctionnement de tels dispositifs automatiques de transfert suppose que la position de chaque objet à transférer puisse être déterminée avec précision et transmise aux circuits de pilotage du dispositif automatique de transfert.

Par ailleurs, on sait que l'origine et la nature d'articles de grande diffusion peuvent être identifiées automatiquement à l'aide de cellules de lecture optique, par la lecture de codes à barres apposés sur les articles ou leurs emballages. Ces codes à barres sont constitués par un nombre donné de barres rectangulaires de même longueur et dont la largeur de chacune est un multiple entier de celle d'un module de base ; ces barres de couleur noire ou sombre sont disposées côte à côte, parallèlement les unes aux autres sur leur longueur, mais non adjacentes, sur un fond de couleur claire, de sorte que deux barres sombres voisines sont toujours séparées par un intervalle clair. Les codes à barres constituent ainsi, sur des étiquettes accolées sur des articles ou groupes d'articles ou sur des emballages d'articles, une cible à lecture optique occupant une surface rectangulaire dont la largeur correspond à la longueur commune des barres et dont la longueur, de valeur prédéterminée et constante, correspond à la somme des largeurs des différentes barres et des intervalles qui séparent ces barres. Ces codes à barres sont lus par un faisceau laser émis par une cellule de lecture optique et déplacé transversalement par rapport à la longueur des barres.

La présente invention a pour but un procédé de détection simple et précis de la position d'objets parallélépipédiques identiques, stockés sur au moins un plateau et destinés à être transférés sur au moins un autre plateau par un dispositif automatique de transfert, le procédé selon l'invention devant permettre une exploitation pratique des positions détectées par les circuits de pilotage du dispositif automatique de transfert tel qu'un palettiseur automatique, et d'identifier la face de référence.

L'invention a également pour but un dispositif fiable et de structure simplifiée destiné à la mise en œuvre du procédé propre à l'invention.

Un autre but de l'invention est de proposer un support de repères de position particulièrement bien adapté à la mise en œuvre du procédé propre à l'invention, lorsqu'il est utilisé avec le dispositif selon l'invention au sein d'un ensemble d'identification et de détection.

A cet effet, la demande a pour objet un procédé selon la revendication 1, un dispositif selon la revendication 7, un support de repères selon la revendication 11 et un ensemble comprenant un tel dispositif et un tel support de repères selon la revendication 17.

Le procédé selon l'invention, tel que revendiqué dans la revendication 1, permettant d'identifier des objets parallélépipédiques et de détecter la position desdits objets stockés sur au moins un premier plateau et destinés à être transférés par un dispositif automatique de transfert sur au moins un autre plateau, et sur chacun desquels figure un support de repères de position à au moins deux volets plans adjacents munis chacun d'une cible à lecture optique ayant une partie de longueur prédéterminée et présentés chacun sur l'une de deux faces adjacentes de l'objet, dont l'une est une grande face délimitée par la longueur et la hauteur de l'objet et dont l'autre est une petite face délimitée par la largeur et la hauteur de l'objet, les objets ayant été stockés sur chaque premier plateau, de sorte que pour chacun d'eux un volet du support de repères correspondant est sensiblement parallèle à une face de référence du plateau sur lequel est stocké cet objet, se caractérise par le fait qu'il consiste, pour chaque objet,

— à balayer au moins une fois la partie de longueur prédéterminée de la cible du volet sensiblement parallèle à la face de référence du premier plateau avec un faisceau de lecture optique émis par une source et déplacé à vitesse constante,

— à mesurer la durée du balayage de la partie de longueur prédéterminée de la cible,

— à calculer la distance qui sépare la source de la face correspondante de l'objet, en fonction de la longueur prédéterminée de la cible, de la vitesse angulaire constante du balayage et de la durée mesurée, ce qui permet de déduire la position des objets si ces derniers ont tous la même orientation, et

— à identifier la face de chaque objet qui se trouve sensiblement parallèle à la face de référence du plateau correspondant par la lecture optique de la cible du volet correspondant du support de repères de cet objet, de sorte que la position de chaque objet puisse être déduite de l'identification de la face correspondante et de la mesure de la distance qui la sépare de la source.

Avantageusement, le procédé consiste à utiliser, comme partie au moins de la cible de chaque volet du support de repères d'un objet, un code à barres dont la lecture optique permet l'identification de la nature de l'objet correspondant, et à balayer la cible selon une direction sensiblement transversale par rapport à la direction des barres du code à barres, ce qui présente l'avantage de l'économie, dans la mesure où l'on peut tirer profit de la présence d'un marquage d'identification d'articles par codes à barres en lui faisant remplir une fonction supplémentaire à celle pour laquelle ce code à barres figure sur les objets, et sans qu'il soit nécessaire d'apposer sur les objets un autre support d'information, tel qu'une étiquette à volet portant les cibles à lecture optique nécessaires à la détection de la position des objets.

Dans ce cas, le procédé consiste en outre à déplacer la source du faisceau de lecture optique dans une direction dont la projection sur la face des objets qui présente un volet sensiblement parallèle à la face de référence du plateau correspondant est sensiblement parallèle à la direction des barres du code à barres de la cible de ce volet, et à commander un balayage angulaire du faisceau dans un plan sensiblement perpendiculaire à cette projection.

Pour chaque réceptacle d'objets stockés, le procédé selon l'invention consiste avantageusement :

— à déplacer tout d'abord la source du faisceau de balayage en regard de celles des faces des objets de la couche supérieure du plateau qui sont sensiblement contenues dans la face de référence du plateau, de l'une à l'autre des deux faces d'extrêmité du plateau qui sont perpendiculaires à la face de référence,

— à déterminer successivement la position des objets correspondants, puis, après transfert de ces derniers par le dispositif automatique de transfert,

— à déplacer à nouveau la source de manière analogue en regard de celles des faces dégagées d'objets restant de la couche supérieure, qui sont sensiblement parallèles à la face de référence du plateau et tournées vers cette face de référence,

— à déterminer successivement la position des objets restant correspondants, puis, après transfert de ces derniers par le dispositif automatique de transfert,

— à procéder de manière analogue jusqu'au transfert de tous les objets de la couche supérieure, puis,

— à déplacer la source vers le bas du plateau d'une hauteur qui correspond à la hauteur d'une couche d'objets, et

— à reprendre ce cycle pour les objets de la nouvelle couche supérieure du plateau, et ainsi de suite jusqu'à la dernière couche d'objets de la palette.

De préférence, pour chaque déplacement de la source en regard d'objets d'une même couche d'un plateau, le procédé consiste de plus :

— à déterminer la position du premier objet de cette couche balayé par le faisceau après au moins deux lectures optiques successives et identiques de la cible du volet en regard sur ce premier objet,

— à interrompre le balayage pendant un intervalle de temps prédéterminé correspondant au temps mis par la source pour se déplacer d'une distance correspondant à la dimension d'un volet de support de repères dans la direction de déplacement de la source,

— à commander à nouveau le balayage du faisceau jusqu'à obtenir au moins deux lectures optiques successives et identiques de la cible du volet en regard sur le second objet de cette couche,

— à interrompre à nouveau le balayage pendant l'intervalle de temps prédéterminé, et ainsi de suite jusqu'à la détermination de la position du dernier objet balayé par le faisceau lors de ce déplacement de la source, ce qui permet de discriminer les lectures optiques relatives à des objets adjacents et de limiter très sensiblement le fonctionnement et donc la consommation énergétique et le vieillissement de la source du faisceau, tout en assurant une bonne fiabilité de détection et une redondance suffisante de la lecture optique des cibles.

Le procédé de détection de position selon l'invention constitue simultanément un procédé particulièrement intéressant de commande d'un dispositif automatique de transfert, tel qu'un palettiseur automatique, s'il consiste de plus :

— à mémoriser les positions successivement déterminées au cours de chaque déplacement de la source en regard d'objets d'une même couche d'un plateau, puis

— à transférer les positions mémorisées au dispositif automatique de transfert, et

— à commander le transfert des objets correspondants, en commençant par celui ou ceux dont la face qui présente le volet balayé par le faisceau au cours de ce déplacement de la source, est la plus proche de la trajectoire de la source, et en poursuivant le transfert des objets par ceux dont la face présentant le volet balayé par le faisceau est de plus en plus éloignée de la trajectoire de la source.

Le dispositif selon l'invention, destiné à la mise en œuvre du procédé présenté ci-dessus et revendiqué dans la revendication 7, comprend :

— une cellule de lecture optique de type reflex à balayage, munie d'une source de faisceau laser, d'un dispositif de balayage du faisceau émis avec une vitesse angulaire constante, et d'un récepteur du faisceau réfléchi par une cible réflectrice de chaque objet dont la position est à déterminer,

— un dispositif de comptage, déclenché et arrêté par le récepteur aux passages du faisceau émis sur les bords d'une partie de longueur prédéterminée de la cible et mesurant la durée du balayage de cette partie,

— un calculateur de la distance séparant la cellule de la cible en fonction de la vitesse angulaire de balayage, de la longueur prédéterminée de la partie balayée sur la cible, et de la durée du balayage de cette partie,

— un dispositif de déplacement longitudinal de la cellule en regard des objets d'une couche d'un plateau et,

— un dispositif de déplacement vertical pas-à-pas de la cellule en regard des différentes couches d'un plateau.

Avantageusement, ce dispositif comprend de plus :

— une mémoire de comparaison de lectures optiques successives d'une même cible,

— un calculateur de la distance parcourue par la cellule en déplacement longitudinal, et

— un commutateur de balayage, qui commande l'interruption du balayage lorsque la mémoire de comparaison a reçu au moins deux lectures optiques successives et identiques de la même cible, et qui commande la reprise du balayage lorsque le calculateur de la distance parcourue par la cellule a calculé que cette dernière s'est déplacée d'une distance donnée depuis l'interruption précédente du balayage.

Afin que le faisceau ne puisse balayer plus d'une cible à la fois, le dispositif comprend de plus un obturateur, qui limite l'angle de balayage efficace du faisceau.

Après chaque interruption du balayage, l'activation de la cellule est convenablement assurée si le dispositif comprend également un commutateur de comptage, commandé par le récepteur de la cellule, et qui place le dispositif de comptage en configuration de mesure lorsque le récepteur détecte l'arrivée du faisceau émis sur un support de repères de détection présentant au moins une cible à lecture optique.

A cet effet, selon l'invention telle que revendiquée dans la revendication 11, le support de repères de position d'un objet parallélépipédique destiné à être stocké sur plateaux et transféré par un dispositif automatique de transfert sur un autre plateau, se caractérise par le fait qu'il comprend au moins deux volets plans adjacents, destinés à être rapportés chacun sur l'une de deux faces adjacentes de l'objet ou solidaires chacun de l'une de ces deux faces, et dont chacun présente une cible à lecture optique ayant une partie de longueur prédéterminée dont la lecture par un faisceau de lecture optique émis par une source permet de déterminer la distance séparant la source de la face de l'objet qui porte le volet dont la cible est balayée par le faisceau.

Un tel support convient lorsque tous les objets présentent une orientation commune sur les plateaux de stockage, mais comme cela n'est pas souvent le cas, la cible présente avantageusement au moins un repère d'identification de la face de l'objet sur laquelle le volet correspondant doit figurer.

Dans une forme très simple et économique de réalisation, la cible présente des repères d'identification de l'objet correspondant sous la forme d'un code à barres à lecture optique, et le repère d'identification de la face comprend au moins une barre supplémentaire, analogue et parallèle à celles du code à barres, et qui est séparée de la barre la plus proche du code à barres par un intervalle de largeur supérieure à celle de tous les intervalles séparant deux barres voisines du code à barres, les deux faces de l'objet sur lesquelles les deux volets doivent figurer étant identifiées par deux nombres différents de barres supplémentaires.

Dans ce cas, le code à barres peut constituer la partie de longueur prédéterminée de la cible, cette longueur étant définie par la distance qui sépare les deux bords externes des deux barres d'extrémité du code à barres, mais la partie de longueur prédéterminée de la cible peut également être délimitée par le code à barres et la ou les barres supplémentaires d'identification de la face, cette longueur prédéterminée étant alors définie par la distance qui sépare le bord extérieur de la barre d'extrémité du code à barres, du côté opposé à la ou aux barres supplémentaires, du bord externe de la barre supplémentaire la plus éloignée du code à barres.

L'invention telle que revendiquée dans la revendication 17 a enfin pour objet un ensemble de détection de la position d'objets parallélépipédiques identiques, stockés sur au moins un plateau et destinés à être transférés sur au moins un autre plateau par un dispositif automatique de transfert, et cet ensemble se caractérise en ce qu'il comprend au moins un dispositif de détection tel que présenté ci-dessus et un jeu de supports de repères de détection tels que ceux également présentés ci-dessus.

Pour mieux faire comprendre l'objet de l'invention, on va en décrire maintenant, à titre d'exemple illustratif, un mode de réalisation représenté sur le dessin annexé

Sur ce dessin :

— la figure 1 est une vue d'un support de repères de position conforme à l'invention ;

— la figure 2 est une vue en perspective d'un objet parallélépipédique présentant un support de repères de position selon la figure 1 ;

— la figure 3 est une vue de face d'une palette de stockage d'objets tels que celui de la figure 2, dont la couche supérieure est représentée en traits pleins et les deux couches inférieures en traits mixtes ;

— la figure 4 est une vue en plan de la couche supérieure de la palette de la figure 3 et de la cellule de détection ;

— la figure 5 est une vue de côté de la palette de la figure 3 et de la cellule de détection représentée sous forme schématique.

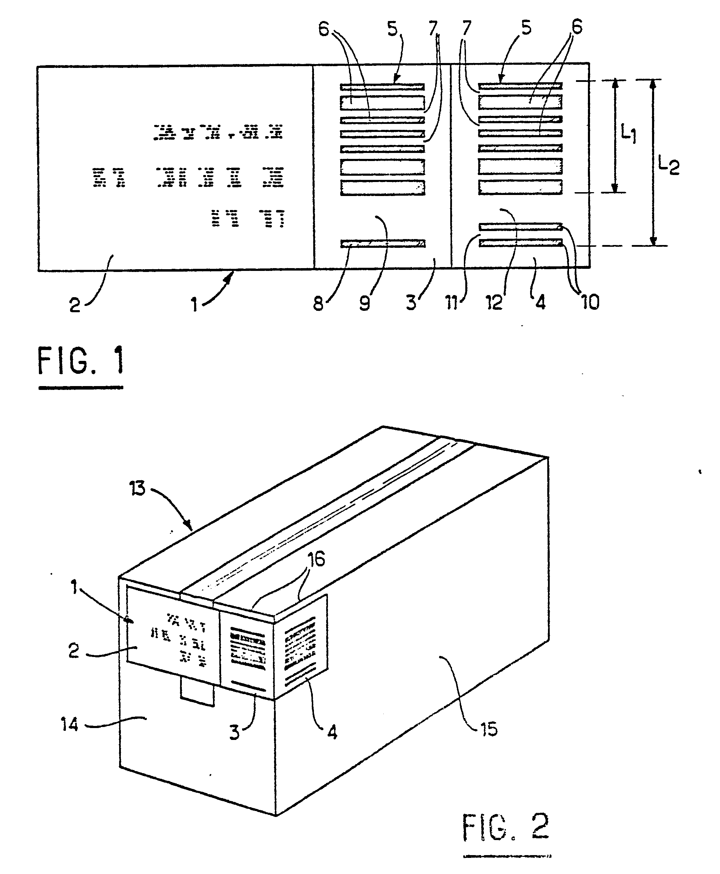

En référence à la figure 1, un support de repères de position se présente sous la forme d'une étiquette rectangulaire autocollante 1 divisée en trois parties rectangulaires adjacentes, dont l'une 2 est une partie sur laquelle figurent des informations alphanumériques d'identification de la nature, de la capacité, des références, etc. d'articles sur lesquels une telle étiquette doit être collée.

Les deux autres parties adjacentes l'une à l'autre 3 et 4 de l'étiquette 1 ont les mêmes dimensions, et sur chacune de ces deux parties figure un code à barres 5, d'un type bien connu, qui identifie l'origine et la nature de l'article à marquer, en correspondance avec tout ou partie des informations que l'on peut lire sur la partie 2 de l'étiquette 1. Ce code à barres 5 est constitué d'une succession de barres 6, noires ou de couleur sombre, rectangulaires, parallèles et non adjacentes, ayant toutes la même longueur et dont chacune correspond à la juxtaposition d'un nombre entier de modules de base rectangulaires de même longueur et de largeur unité, de sorte que les barres 6 ont des largeurs qui sont des multiples entiers de la largeur unité. Les barres 6 sont séparées les unes des autres par des intervalles 7 de largeur constante et à fond clair, correspondant à la surface claire et très réfléchissante des parties 3 et 4 de l'étiquette 1. La largeur du code à barres 5 correspond à la longueur des barres 6 tandis que la longueur du code à barres 5 correspond à la somme des largeurs des barres 6 et des intervalles 7, et les codes à barres 5 ont toujours la même longueur et la même largeur, même s'ils identifient des articles différents.

En plus des barres 6 du code à barres 5, la partie 3 d'étiquette 1 présente une autre barre 8, analogue aux barres 6, parallèle à ces dernières mais séparée de la barre 6 la plus proche par un intervalle clair 9 de largeur supérieure à celle de tous les autres intervalles 7 séparant les barres 6, tandis que la partie 4 de l'étiquette 1 présente deux autres barres 10, analogues aux barres 6 et 8, de même longueur chacune que la barre 8, parallèles l'une à l'autre et aux barres 6 des codes à barres 5 et séparées l'une de l'autre par un intervalle 11 de même largeur que ceux 7 qui séparent les barres 6, la barre 10 intérieure (la plus proche du code à barres 5) étant séparée de la barre 6 la plus proche par un intervalle 12 qui, comme l'intervalle 9, est de largeur supérieure à celle des intervalles 7.

Dans cette réalisation, non seulement la longueur $L_1$ des codes à barres 5 (c'est-à-dire la distance qui sépare les bords externes des deux barres 6 d'extrémité) est constante, mais la longueur $L_2$, qui correspond à la distance séparant le bord externe de la barre supplémentaire 8 ou 10 la plus éloignée du code à barres 5 du bord externe de la barre 6 la plus éloignée de la ou des barres 8 ou 10 supplémentaires, est également constante.

Sur chaque partie 3 et 4 de l'étiquette 1, l'ensemble des barres 6 du code à barres 5 et de la ou des barres supplémentaires 8 ou 10 constitue une cible à lecture optique, dont le balayage, selon une direction transversale et de préférence perpendiculaire à la longueur des barres 6, 8 et 10, par un faisceau laser émis par une cellule de lecture optique de type reflex, permet d'une part d'identifier l'article désigné par le code à barres 5 et d'autre part d'identifier la partie 3 ou 4 qui est balayée, en raison des nombres différents de barres supplémentaires 8 ou 10 présentées par ces parties 3 et 4.

Chaque cible à lecture optique comprend donc une partie de longueur prédéterminée (considérée dans la direction de déplacement de faisceau de lecture) qui est constante sur les deux parties 3 et 4 d'une étiquette 1 et d'une étiquette à l'autre, et qui est donc soit la longueur $L_1$ soit la longueur $L_2$ dans l'exemple décrit, mais qui peut n'être que la longueur $L_1$ si $L_2$ varie de la partie 3 à la partie 4 d'une étiquette.

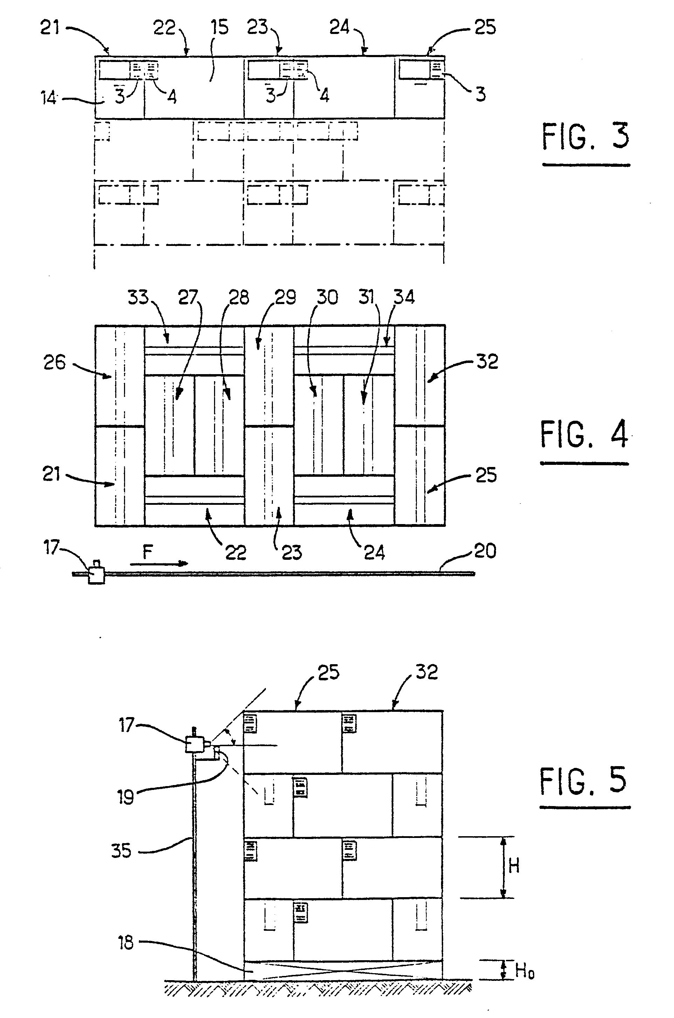

Sur la figure 2, un objet parallélépipédique tel qu'une boîte en carton 13, dans laquelle sont enfermés un certain nombre d'articles, par exemple des flacons de shampoing, des distributeurs de mousse à raser, des bouteilles de détergent, etc., porte une étiquette 1, dont les parties 2 et 3 constituent un volet collé sur une petite face 14 de la boîte délimitée par la hauteur et la largeur, et dont l'autre partie 4 constitue un second volet d'étiquette collé sur la grande face 15 adjacente, délimitée par la hauteur et la longueur de la boîte 13, de sorte que la ligne de séparation entre les deux volets adjacents soit située sur l'arête verticale commune aux faces 14 et 15.

L'étiquette 1 est collée sur la boîte 13 au voisinage des arêtes 16 communes aux faces 14 et 15 à la face supérieure de la boîte 13, et la distance qui sépare les arêtes 16 du bord inférieur de l'étiquette 1 est inférieure à la moitié de la hauteur de la boîte 13.

Sur une étiquette 1 ainsi collée sur une boîte 13, on constate que le code à barres 5 de la cible à lecture optique de chaque volet permet d'identifier la boîte 13 et les articles qu'elle renferme, tandis que la ou les barres supplémentaires 8 et 10 de la cible de chaque volet permettent d'identifier la face 14 ou 15 sur laquelle le volet correspondant est collé.

Des boîtes 13 identiques contenant des articles d'un type donné et portant les étiquettes correspondantes, collées de la même manière sur toutes les boîtes 13, peuvent être stockées sur des palettes homogènes, de sorte que pour chaque boîte 13 l'une des faces 14 et 15 est parallèle à une face de référence de la palette et contenue dans cette face de référence ou tournée vers elle, comme cela est schématiquement représenté sur la figure 3 pour les trois couches supérieures d'une palette dont la face de référence est contenue dans le plan de cette figure.

Dans les installations de préparation de commande au sol, plusieurs palettes homogènes, ayant par exemple une longueur de 1,2 m et une largeur de 1 m, et sur chacune desquelles sont stockées des boîtes 13 identiques mais contenant des articles différents d'une palette à l'autre, sont alignées, de sorte que leur face de référence soit sensiblement dans le même plan vertical, et un chariot portant d'une part une palette vide, par exemple d'une autre taille (longueur 1,2 m et largeur 0,8 m) et d'autre part, un palettiseur automatique muni d'un bras manipulateur, se déplace devant les faces de référence des palettes de stockage alignées et le long de ces dernières, afin d'empiler automatiquement et de manière homogène sur la palette vide des couches de boîtes provenant de différentes palettes de stockage, de sorte que la première couche soit formée de boîtes contenant par exemple des détergents, la deuxième couche de boîtes contenant des flacons de shampoing, la troisième couche de boîtes contenant des distributeurs de mousse à raser, etc.

Le chariot se déplace longitudinalement devant la rangée de palettes de stockage avec une vitesse constante inférieure par exemple à 1 m/s, et afin que le palettiseur automatique puisse assurer le transfert des boîtes 13 ; le chariot porte également un dispositif de détection de la position de ces boîtes 13 sur les palettes de stockage, l'organe essentiel de ce dispositif étant une cellule de lecture optique à faisceau laser, du type de celles que l'on utilise pour lire les codes à barres.

Cette cellule, représentée dans son ensemble en 17 sur les figures 4 et 5, est de type reflex à balayage, c'est-à-dire qu'elle comprend un émetteur constitué par une source de faisceau laser et un dispositif de balayage angulaire du faisceau avec une vitesse angulaire constante, et associé à un photo-récepteur, sensible à la fraction du faisceau émis qui est réfléchie par une cible et qu'il reçoit. Le dispositif de balayage est par exemple constitué d'un miroir oscillant avec une fréquence constante autour d'un axe horizontal, afin de réfléchir, sous forme de faisceau de balayage alternatif dans un plan vertical le rayon laser incident qu'il reçoit de la source. Il est également possible d'utiliser comme dispositif de balayage une roue polygonale à miroirs entraînée en rotation à vitesse constante autour d'un axe horizontal, et qui réfléchit sous la forme d'un faisceau de balayage vertical unidirectionnel le rayon incident reçu de la source. On utilise par exemple une cellule à balayage synchrone assurant 300 balayages par seconde et munie d'une fenêtre optique donnant un angle de balayage de 60°, dont la bissectrice est horizontale.

La cellule 17 est déplacée d'une part horizontalement avec le chariot par un dispositif de déplacement longitudinal, et, d'autre part, verticalement sur le chariot par un dispositif de déplacement vertical pas-à-pas, dont le pas est réglable pour être ajusté à la hauteur des boîtes 13 à transférer.

Lorsque le faisceau émis par une telle cellule 17 balaie verticalement et de haut en bas la cible à lecture optique du volet d'étiquette 1 collé sur la petite face 14 ou la grande face 15 en regard d'une boîte 13, il se produit, au moment où le faisceau atteint le bord supérieur de ce volet, un changement d'intensité du signal lumineux reçu par le récepteur de la cellule 17, compte tenu du coefficient de réflexion de la surface de l'étiquette 1. Le récepteur commande alors un commutateur de comptage, qui met un dispositif de comptage en état de mesure. Lorsque le faisceau atteint le bord extérieur ou supérieur de la barre 6 supérieure du code à barres 5, le dispositif de comptage est déclenché, et ce dernier s'arrête dès que le faisceau a balayé la longueur prédéterminée connue et choisie $L_1$ ou $L_2$, au passage du

bord inférieur respectivement de la barre 6 inférieure du code à barres 5 ou de la barre supplémentaire inférieure 8 ou 10. Puis le commutateur de comptage bloque le dispositif de comptage dès que le faisceau a franchi le bord inférieur de l'étiquette 1. Le dispositif de comptage assure ainsi, par comparaison avec des impulsions de référence données par une horloge, la mesure de la durée T du balayage de la partie de longueur prédéterminée choisie $L_1$ ou $L_2$ de la cible à lecture optique, par un faisceau déplacé avec une vitesse angulaire constante. Un calculateur électronique en déduit la distance D qui sépare la cellule 17 de la face 14 ou 15 portant le volet dont la cible optique a été balayée, et cette distance D est inversement proportionnelle à la durée T mesurée.

On réalise ainsi une mesure télémétrique. Simultanément, la cellule 17 permet de lire le code à barres 5, afin de s'assurer de la nature des boîtes 13 dont la position est détectée, et de lire le nombre de barres supplémentaires 8 ou 10 dont le balayage est annoncé par le balayage des larges intervalles clairs 9 ou 12 qui les séparent du code à barres 5, ce qui permet d'identifier la face 14 ou 15 qui est en regard de la cellule 17.

La mesure de la distance D et l'identification de la face de la boîte 13 en regard de la cellule 17 permettent de déduire la position précise occupée par la boîte 13.

Des essais ont montré que la distance D est mesurée avec une précision de ± 15 mm lorsque D est comprise entre 0,4 m et 2 m. Dans le cas où les boîtes 13 ne sont pas convenablement alignées par rapport au plan de référence de la palette, ce défaut d'alignement peut être mesuré, en vue d'une remise en ordre ultérieure, par la différence entre les mesures de la distance D aux deux bords de la cible considérés dans la direction horizontale de déplacement de la cellule 17 en regard.

Comme représenté sur les figures 3 à 5, la cellule 17 est initialement amenée, par le dispositif de déplacement horizontal, au niveau d'une face d'extrémité de la palette 18 qui est perpendiculaire à la face de référence de cette dernière, et par le dispositif de déplacement vertical à une hauteur $Z_i = (n - 1) \times H + H/2 + H_0$ ,
où $H_0$ est la hauteur de la palette 18,
H est la hauteur des boîtes et donc la hauteur de chacune des couches sur la palette 18, et
n le nombre de couches de boîtes sur la palette 18, de sorte que la bissectrice de l'angle de balayage de 60° soit contenue dans le plan horizontal coupant les boîtes de la couche supérieure à mi-hauteur.

Puis la cellule 17 est déplacée longitudinalement et horizontalement en regard des boîtes de la couche supérieure, selon la flèche F sur la figure 4, et le balayage est déclenché par un commutateur de balayage. Afin d'assurer que le faisceau ne puisse balayer une cible à lecture optique d'une boîte de la couche immédiatement inférieure, un obturateur représenté schématiquement en 19 sur la figure 5 limite le balayage efficace au demi-angle supérieur, ce qui est suffisant pour balayer entièrement la cible en regard de n'importe quelle boîte de la couche supérieure.

Si l'on se réfère aux figures 3 et 4, lors du déplacement de la cellule 17 le long du rail de guidage horizontal 20, le faisceau émis balaie en premier la cible de la petite face 14 de la première boîte 21 de la couche supérieure. La position de cette boîte 21 est déterminée dès que le dispositif a réalisé trois lectures optiques successives et identiques de cette cible. Chaque lecture, qui consiste en l'identification de la boîte 21 et de la face 14 de cette dernière se trouvant en regard de la cellule 17, et qui permet le calcul de la distance D, est mise en mémoire dans une mémoire de comparaison des lectures optiques successives. Dès que les trois lectures optiques identiques ont été obtenues, le commutateur de balayage interrompt le balayage.

La position de la boîte 21 est stockée dans une mémoire de stockage des positions déterminées, alors que la cellule 17 poursuit son déplacement horizontal. A l'arrêt du balayage, est déclenché un dispositif de mesure de la distance parcourue par la cellule 17 le long du rail 20. Lorsque cette distance parcourue atteint un seuil correspondant à la largeur connue et constante d'une cible, ce dispositif de mesure de la distance parcourue actionne le commutateur de balayage, qui commande la reprise du balayage. Ceci permet d'assurer la discrimination des lectures optiques de deux cibles très proches l'une de l'autre bien que portées par des volets d'étiquettes collées sur deux boîtes différentes, comme cela est clairement représenté sur la figure 3, où la seconde boîte 22 de la couche supérieure est telle que la cible de sa grande face 15 est très proche de la cible de la petite face 14 de la boîte 21. Après avoir déterminé la position de la boîte 22 par trois lectures optiques successives et identiques de la cible de sa face 15, et après avoir mémorisé cette position dans la mémoire de stockage, la cellule 17 détermine successivement et de manière analogue les positions des autres boîtes 23, 24 et 25 en regard sur la couche supérieure, et arrête son déplacement horizontal au niveau de l'autre face d'extrémité de la palette 18, dont les dimensions sont connues par un calculateur central (par exemple un microprocesseur), qui commande le déroulement des opérations.

Les positions des boîtes 21 à 25 qui figurent en mémoire de stockage sont ensuite transmises au circuit de commande du palettiseur automatique, qui transfère successivement ces boîtes 21 à 25 sur la palette déplacée avec le chariot.

Puis la cellule 17 est ramenée en position initiale et reprend, de manière analogue, un cycle de détermination des positions des boîtes restantes de la couche supérieure dont les faces 14 ou 15 sont dégagées et en regard de la cellule 17 au cours de son déplacement le long du rail 20.

Ce second déplacement permet donc de déterminer et de mémoriser les positions des boîtes 26 à 32, qui sont ensuite transférées en commençant par les boîtes 27, 28, 30 et 31, qui sont les plus proches de la trajectoire de la cellule 17, puis en terminant par les boîtes 26, 29 et 32.

Au cycle suivant, la cellule 17 détermine successivement les positions des deux boîtes restantes 33 et 34 de la couche supérieure, puis, après le transfert de celles-ci, la cellule 17 est ramenée en position initiale par le dispositif de déplacement longitudinal, puis descendue le long du rail de guidage vertical 35 par le dispositif de déplacement vertical pas-à-pas, sur une hauteur H correspondant au pas de ce dispositif, afin d'être en regard des boîtes de la nouvelle couche supérieure de la palette, et de pouvoir reprendre le cycle décrit ci-dessus pour assurer le transfert de ces boîtes.

On procède ainsi couche par couche, les mouvements du palettiseur automatique étant bornés par les dimensions connues des palettes.

On peut ainsi soit déstocker couche par couche une palette, puis passer à une palette suivante, soit déstocker les couches supérieures de plusieurs palettes accolées et alignées, puis passer aux couches inférieures, en fonction des commandes à préparer, la gestion de l'ensemble de l'installation étant assurée par exemple par un microprocesseur auquel on a transmis les instructions relatives aux commandes à préparer.

**Revendications**

1. Procédé d'identification d'une face d'objets parallélépipédiques (13) identiques, et de détection de la position desdits objets, destinés à être transférés par un dispositif automatique de transfert d'un premier plateau (18) sur au moins un autre plateau chacun desdits objets portant un support de repères de position (1) à au moins deux volets plans adjacents (2-3, 4), chacun desdits volets étant muni d'une cible à lecture optique (5, 8, 10), dont une partie a une longueur prédéterminée ($L_1$, $L_2$), et étant présenté sur l'une de deux faces adjacentes (14, 15) de l'objet (13) dont l'une (15) est une grande face délimitée par la longueur et la hauteur de l'objet, et dont l'autre (14) est une petite face délimitée par la largeur et la hauteur de l'objet, les objets (13) ayant été stockés sur chaque premier plateau (18) de sorte que, pour chacun d'eux, un volet (2-3, 4) du support de repères (1) correspondant est sensiblement parallèle à une face de référence de premier plateau (18) sur lequel est stocké cet objet, caractérisé par le fait que, pour chaque objet (13),

— on balaie au moins une fois la partie de longueur prédéterminée ($L_1$, $L_2$) de la cible (5, 8, 10) du volet sensiblement parallèle à la face de référence du premier plateau (18) avec un faisceau de lecture optique émis par une source (17) et déplacé à une vitesse angulaire constante,

— on mesure la durée (T) du balayage de la partie de longueur prédéterminée ($L_1$, $L_2$) et

— on calcule la distance (D) qui sépare la source (17) de la face correspondante (14, 15) de l'objet (13) en fonction de la longueur prédéterminée ($L_1$, $L_2$) de la vitesse constante du balayage et de la durée (T) mesurée.

— et que, de plus, on identifie la face (14, 15) de chaque objet (13) qui se trouve sensiblement parallèle à la face de référence du premier plateau correspondant (18) par la lecture optique de la cible (5, 8, 10) du volet correspondant (2-3, 4) du support de repères (1) de cet objet (13), la partie de longueur prédéterminée de ladite cible ayant une longueur spécifique à une face de l'objet.

2. Procédé selon la revendication 1, caractérisé par le fait que l'on utilise, au moins comme partie de la cible chaque volet (2-3, 4) du support de repère (1) d'un objet (13) un code à barres (5) dont la lecture optique permet l'identification de la nature de l'objet (13) correspondant, et que l'on balaie la cible selon une direction sensiblement transversale par rapport à la direction des barres (6) du code à barres (5).

3. Procédé selon la revendication 2, caractérisé par le fait qu'en outre, on déplace la source (17) du faisceau de lecture optique dans une direction (20) dont la projection sur la face (14, 15) des objets (13), qui présente un volet (2-3, 4) sensiblement parallèle à la face de référence du premier plateau correspondant (18), est sensiblement parallèle à la direction des barres (6) du code à barres (5) de la cible de ce volet, et que l'on commande un balayage angulaire du faisceau dans un plan sensiblement perpendiculaire à cette projection.

4. Procédé selon l'une des revendications 1 à 3, caractérisé par le fait que, pour chaque premier plateau (18) d'objets stockés,

— on déplace tout d'abord la source (17) du faisceau de balayage en regard de celles des faces (14, 15) des objets de la couche supérieure du premier plateau (18), qui sont sensiblement continues, dans la face de référence de premier plateau (18), de l'une à l'autre des deux faces d'extrémités de ce premier plateau qui sont perpendiculaires à la face de référence.

— on détermine successivement la position des objets (21 à 25) correspondants, puis, après transfert de ces derniers par le dispositif automatique de transfert,

— on déplace à nouveau la source (17) de manière analogue en regard de celles des faces (14, 15) dégagées d'objets restants de la couche supérieure, qui sont sensiblement parallèles à la face de référence de premier plateau (18) et tournées vers cette face de référence,

— on détermine successivement la position des objets restants correspondants (26 à 32), puis, après transfert de ces derniers par le dispositif automatique de transfert,

— on procède de manière analogue jusqu'au transfert de tous les objets de la couche supérieure, après quoi

— on déplace la source (17) vers le bas de premier plateau (18) d'une hauteur qui correspond à la hauteur (H) d'une couche d'objets, et

— on reprend ce cycle pour les objets de la nouvelle couche supérieure du premier plateau, et ainsi de suite jusqu'à la dernière couche d'objets de ce premier plateau.

5. Procédé selon la revendication 4, caractérisé par le fait que, pour chaque déplacement de la source (17) en regard d'objets d'une même couche d'une premier plateau (18),

— on détermine la position du premier objet (21) de cette couche balayée par le faisceau après au moins deux lectures optiques successives et identiques de la cible (2-3, 4) du volet en regard sur ce premier objet (21),

— on interrompt le balayage pendant un intervalle de temps prédéterminé correspondant au temps mis par la source (17) pour se déplacer d'une distance correspondant à la dimension d'un volet (2-3, 4) de support de repères (1) dans la direction (20) de déplacement de la source (17),

— on commande à nouveau le balayage du faisceau jusqu'à obtenir au moins deux lectures optiques identiques et successives de la cible du volet (2-3, 4) en regard sur le second objet (22) de cette couche,

— on interrompt à nouveau le balayage pendant l'intervalle de temps prédéterminé, et ainsi de suite jusqu'à la détermination de la position du dernier objet (25) de cette couche balayé par le faisceau, lors de ce déplacement de la source (17).

6. Procédé de détection de la position d'objets parallélépipédiques identiques (13) stockés sur au moins un premier plateau (18), selon l'une des revendications 4 ou 5, et de commande d'un dispositif automatique de transfert de ces objets sur au moins un autre plateau, caractérisé par le fait que :

— on mémorise les positions successivement déterminées au cours de chaque déplacement de la source (17) en regard d'objet (13) d'une même couche d'un premier plateau (18) ;

— on transfère ces positions mémorisées au dispositif automatique de transfert, et

— on commande le transfert des objets correspondants, en commençant par celui ou ceux dont la face (14, 15) qui présente le volet (2-3, 4) balayé par le faisceau au cours de ce déplacement de la source (17) est la plus proche de la trajectoire de la source (17), et en poursuivant le transfert des objets par ceux dont la face présentant le volet balayé par le faisceau est de plus en plus éloignée de la trajectoire de la source.

7. Dispositif d'identification d'une face de référence d'objets parallélépipédiques (13) identiques et de détection de la position desdits objets, stockés sur au moins un premier plateau (18) et destinés à être transférés sur au moins un autre plateau par un dispositif automatique de transfert, pour la mise en œuvre du procédé selon l'une des revendications 1 à 6, caractérisé par le fait qu'il comprend :

— une cellule (17) de lecture optique de type reflex à balayage, qui est munie d'une source de faisceau laser, d'un dispositif de balayage du faisceau avec une vitesse angulaire constante, et d'un récepteur du faisceau réfléchi, par au moins une cible (5, 8, 10) réflectrice de chaque objet,

— un dispositif de comptage, déclenché et arrêté par le récepteur aux passages du faisceau émis sur les bords d'une partie de la cible et mesurant la durée (T) du balayage de cette partie, qui a une longueur prédéterminée ($L_1$, $L_2$) spécifique à une face de l'objet,

— un calculateur de la distance (D) séparant la cellule (17) de la cible en fonction de la vitesse angulaire de balayage, de la longueur prédéterminée ($L_1$, $L_2$) de la partie balayée sur la cible, et de la durée (T) du balayage de cette partie,

— un dispositif de déplacement longitudinal (20) de la cellule (17) en regard des objets d'une couche d'un premier plateau (18), et

— un dispositif de déplacement vertical pas à pas (35) de la cellule (17) en regard des différentes couches d'un premier plateau (18), la cellule (17) étant propre à identifier la face de l'objet par lecture optique de la cible.

8. Dispositif selon la revendication 7, caractérisé par le fait qu'il comprend :

— une mémoire de comparaison des lectures optiques successives d'une même cible (5, 8, 10)

— un calculateur de la distance parcourue par la cellule (17) en déplacement longitudinal (20) et,

— un commutateur de balayage, qui commande l'interruption du balayage lorsque la mémoire de comparaison a reçu au moins deux lectures optiques successives et identiques de la même cible (5, 8, 10) et qui commande la reprise du balayage lorsque le calculateur de la distance parcourue par la cellule (17) a calculé que cette dernière s'est déplacée d'une distance donnée depuis l'interruption précédente du balayage.

9. Dispositif selon l'une des revendications 7 et 8, caractérisé par le fait qu'il comprend un obturateur (19) qui limite l'angle de balayage efficace du faisceau.

10. Dispositif selon l'une des revendications 7 à 9, caractérisé par le fait qu'il comprend un commutateur de comptage, commandé par le récepteur de la cellule (17), ce commutateur de comptage plaçant le dispositif de comptage en configuration de mesure lorsque le récepteur détecte l'arrivée du faisceau émis sur un support de repères de détection (1), qui présente au moins une cible à lecture optique (5, 8, 10).

11. Support de repères de position (1) pour l'identification d'une face de référence d'un objet parallélépipédique (13) et à la détection de la position dudit objet destiné à être stocké sur au moins un premier plateau (18) et transféré par un dispositif automatique de transfert sur un autre plateau, ledit support étant utilisable pour la mise en œuvre du procédé selon l'une des revendications 1 à 6, caractérisé par le fait qu'il comprend au moins deux volets plans adjacents (2-3, 4) destinés à être rapportés chacun sur l'une des deux faces adjacentes (14, 15) de l'objet (13) ou solidaires chacun de l'une de ces deux faces, et dont chacun présente une cible à lecture optique (5, 8, 10) ayant une partie de longueur prédéterminée ($L_1$, $L_2$) dont la lecture par un faisceau de lecture optique émis par une source (17) permet de déterminer la distance (D) séparant la source (17) de la face (14, 15) de l'objet (13) portant le volet dont la cible est balayée par le faisceau.

12. Support de repères d'identification et de position selon la revendication 11, caractérisé par le fait que la cible présente au moins un repère d'identification (8, 10) de la face (14, 15) de l'objet (13) sur laquelle le volet correspondant (2-3, 4) doit figurer.

13. Support de repères d'identification et de position selon l'une des revendications 11 ou 12, caractérisé par le fait que la cible présente des repères d'identification de l'objet (13) correspondant sous la forme d'un code à barres à lecture optique (5).

14. Support de repères d'identification et de position selon les revendications 12 et 13, prises simultanément, caractérisé par le fait que le repère d'identification de la face (14, 15) comprend au moins une barre supplémentaire (8, 10) analogue et parallèle à celles du code à barres (5), et qui est séparée de la barre (6) la plus proche du code à barres (5) par un intervalle (9, 12) de largeur supérieure à celle de tous les intervalles (7) séparant deux barres (6) voisines du code à barres (5), les deux faces (14, 15) de l'objet (13) sur lesquelles les deux volets doivent figurer étant identifiées par deux nombres différents de barres supplémentaires (8, 10).

15. Support de repères d'identification et de position selon l'une des revendications 13 ou 14, caractérisé par le fait que le code à barres (5) constitue la partie de longueur prédéterminée ($L_1$) de la cible, cette longueur ($L_1$) étant définie par la distance qui sépare les deux bords externes des deux barres d'extrémité (6) du code à barres (5).

16. Support de repères d'identification et de position selon la revendication 14, caractérisé par le fait que la partie de longueur prédéterminée ($L_2$) de la cible est délimitée par le code à barres (5) et la (ou les) barre(s) supplémentaire(s) (8, 10), cette longueur prédéterminée ($L_2$) étant définie par la distance qui sépare le bord externe de la barre d'extrémité (6) du code à barres (5), située du côté opposé à la ou aux barres supplémentaires (8, 10), du bord extérieur de la barre supplémentaire (8, 10) la plus éloignée du code à barres (5).

17. Ensemble d'identification d'une face de référence d'objets parallélépipédiques (13) identiques et de détection desdits objets stockés sur au moins un premier plateau (18) et destinés à être transférés sur au moins un autre plateau par un dispositif automatique de transfert, caractérisé par le fait qu'il comprend au moins un dispositif de détection selon l'une des revendications 7 à 10 et au moins un jeu de supports de repères de détection selon l'une des revendications 11 à 16.

## Claims

1. A method for identifying one side of parallelepiped objects and for detecting the position of the said objects intended to be transferred by an automatic transfer device from a first tray (18) to at least one other tray, each one of the said objects carrying a carrier for the position marks (1) with at least two flat adjacent dockets (2-3, 4), each one of the said dockets being provided with an optical reading target (5, 8, 10), one portion whereof has a predetermined length ($L_1$, $L_2$) and being presented on one of two adjacent sides (14, 15) of the object (13), whereof one (15) is a large side delimited by the length and height of the object and whose other (14) is a small side delimited by the width and the height of the object, the objects (13) having been stored on each first tray (18) so that for each one of them, one docket (2-3, 4) of the corresponding marks carrier (1) is substantially parallel to one reference side of the first tray (18) whereon this object is stored, characterised in that for each object (13),

— the portion of predetermined length ($L_1$, $L_2$) of the target (5, 8, 10) of the docket which is substantially parallel to the reference side of the first tray (18) is scanned at least once with an optical reading beam emitted by a source (17) and displaced at a constant angular velocity,

— the time (T) of scanning the portion of predetermined length ($L_1$, $L_2$) is measured,

— and the distance (D) separating the source (17) from the corresponding side (14, 15) of the object (13) is calculated, according to the predetermined length ($L_1$, $L_2$), the constant scanning speed and the measured time (T),

— and that, moreover, the side (14, 15) of each object (13) which is located substantially parallel to the reference side of the first corresponding tray (18) is identified by the optical reading of the target (5, 8, 10) of the corresponding docket (2-3, 4) of the marks carrier (1) of this object (13), the portion of predetermined length of the said target having a length which is specific to one side of the object.

2. A method according to Claim 1, characterised in that one uses at least as a portion of the target, each docket (2-3, 4) of the marks carrier (1) of an object (13), a bar code (5), the optical reading whereof allows the nature of the corresponding object (13) to be identified, and that one scans the target along a substantially transverse direction in relation to the direction of the bars (6) of the bar code (5).

3. A method according to Claim 2, characterised in that, moreover, the source (17) of the optical reading beam is displaced in a direction (20) whose projection on the side (14, 15) of the objects (13) having a docket (2-3, 4) substantially parallel to the reference side of the corresponding first tray (18) is substantially parallel to the direction of the bars (6) of the bar code (5) of the target of this docket, and an angular scanning of the beam is actuated in a plane substantially perpendicular to this projection.

4. A method according to one of Claims 1 to 3, characterised in that for each first tray (18), for the stored objects,

— one first displaces the source (17) of the scanning beam opposite those of the sides (14, 15) of the objects of the upper layer of the first tray (18) which are substantially contained in the reference side of the first tray (18), from one to the other of the two end sides of this first tray which are perpendicular to the reference side,

— the position of the corresponding objects (21 to 25) is successively determined, then, after these latter have been transferred by the automatic transfer device,

— the source (17) is again displaced in a similar way opposite those of the free sides (14, 15) of the remaining objects of the upper layer which are substantially parallel to the reference side of the first tray (18) and turned towards this reference side,

— the position of the corresponding remaining objects (26 to 32) is successively determined, then, after these latter have been transferred by the automatic transfer device,

— one proceeds in a similar manner until all the objects of the upper layer have been transferred after which,

— the source (17) is displaced towards the bottom of the first tray (18) by one level corresponding to the height (H) of one layer of the objects, and

— this cycle is resumed for the objects of the new upper layer of the first tray and so on, as far as the last layer of objects of this first tray.

5. A method according to Claim 4 characterised in that for each displacement of the source (17) opposite the objects of one and the same layer of a first tray (18),

— the position of the first object (21) of this layer scanned by the beam is determined after at least two successive and identical optical readings of the target (2-3, 4) of the facing docket on this first object (21),

— the scanning is interrupted during a predetermined time interval corresponding to the time taken by the source (17) for being displaced by a distance corresponding to the dimension of a docket (2-3, 4) of a marks carrier (1) in the displacement direction (20) of the source (17),

— the scanning of the beam is reactivated until at least two identical and successive readings of the target of the facing docket (2-3, 4) on the second objet (22) of this layer are obtained,

— the scanning is again interrupted over a predetermined time interval, and so on up to the determination of the position of the last object (25) of this layer scanned by the beam during this displacement of the source (17).

6. A method for detecting the position of identical parallelepiped objects (13) stored on at least one first tray (18), according to one of claims 4 or 5, and for the control of an automatic device for transfering these objects to at least one other tray, characterised in that :

— the positions successively determined during each displacement of the source (17) opposite the object (13) of one and the same layer of a first tray (18) are memorised,

— these memorised positions are transferred to the automatic transfer device, and

— the transfer of the corresponding objects is actuated starting with that or those whose side (14, 15) having the docket (2-3, 4) scanned by the beam during this displacement of the source (17) is nearest the trajectory of the source (17) and continuing the transfer of the objects with those whose face having the docket scanned by the beam is progressively more remote from the trajectory of the source.

7. A device for identifying a reference side of identical parallelepiped objects (13) and for detecting the position of the said objects, stored on at least one first tray (18) and intended to be transferred to at least one other tray by an automatic transfer device, for the implementation of the method in accordance with one of Claims 1 to 6, characterised in that it comprises

— an optical reader cell (17) of the scanning reflex type, which is provided with a laser beam source, with a device scanning the beam with a constant angular velocity, and with a receiver of the beam reflected by at least one reflecting target (5, 8, 10) of each object,

— a counter device started and stopped by the receiver as the emitted beam passes over the edges of one portion of the target and measuring the time (T) of scanning this portion, which has a predetermined length $(L_1, L_2)$ specific to one side of the object,

— a calculator of the distance (D) separating the cell (17) from the target on the basis of the angular scanning velocity, the predetermined length $(L_1, L_2)$ of the scanned portion on the target, and the time (T) of scanning this portion,

— a device for the longitudinal displacement (20) of the cell (17) opposite the objects of one layer of a first tray (18), and

— a device (35) for the step-wise vertical displacement of the cell (17) opposite the various layers of a first tray (18), the cell (17) being capable of identifying the side of the object by the optical reading of the target.

8. A device according to Claim 7, characterised in that it comprises,

— a memory for comparing the successive optical reading of one and the same target (5, 8, 10),

— a calculator of the distance covered by the cell (17) in its longitudinal displacement (20) and,

— a scanning switch actuating the interruption of the scanning when the comparator memory has received at least two successive and identical optical readings of the same target (5, 8, 10) and which actuates the resumption of scanning when the calculator of the distance covered by the cell (17) has calculated that this latter has been displaced by a given distance as from the previous interruption of scanning.

9. A device according to one of Claims 7 and 8 characterised in that it comprises an obturator (19) limiting the effective scanning angle of the beam.

10. A device according to one of Claims 7 to 9, characterised in that it comprises a counter switch controlled by the receiver of the cell (17),

this counter switch placing the counter device into the measuring configuration when the receiver detects the arrival of the emitted beam on a carrier (1) of the detection marks having at least one optical reading target (5, 8, 10).

11. A carrier (1) of the position marks for the identification of a reference side of a parallelepiped object (13) and for the detection of the position of the said object intended to be stored on at least one first tray (18) and to be transferred by an automatic transfer device to another tray, the said carrier being capable of being used for the implementation of the method according to one of Claims 1 to 6, characterised in that it comprises at least two flat adjacent dockets (2-3, 4) intended to be each attached to one of two adjacent sides (14, 15) of the object (13) or to be each integral with one of these two sides, and whereof each has an optical reading target (5, 8, 10), having a portion of predetermined length ($L_1$, $L_2$), the reading whereof by an optical reading beam emitted by a source (17) makes it possible to determine the distance (D) separating the source (17) from the side (14, 15) of the object (13) carrying the docket whose target is scanned by the beam.

12. A carrier of identification and position marks according to Claim 11, characterised in that the target has at least one mark (8, 10) for identifying the side (14, 15) of the object (13) on which the corresponding docket (2-3, 4) must appear.

13. A carrier of identification and position marks according to one of Claims 11 or 12, characterised in that the target has marks for identifying the corresponding object (13) in the form of an optical reading bar code (5).

14. A carrier of identification and position marks according to Claims 12 and 13 taken together, characterised in that the mark for identifying the side (14, 15) comprises at least one additional bar (8, 10) similar and parallel to those of the bar code (5), and which is separated from the nearest bar (6) of the bar code (5) by a gap (9, 12) of a width greater than that of all the gaps (7) separating two adjacent bars (6) of the bar code (5), the two sides (14, 15) of the object (13) on which the two dockets have to appear being identified by two different numbers of — additional bars (8, 10).

15. A carrier of identification and position marks according to one of Claims 13 or 14, characterised in that the bar code (5) constitutes the portion of predetermined length ($L_1$) of the target, this length ($L_1$) being defined by the distance separating the two external edges of the two end bars (6) of the bar code (5).

16. A carrier of identification and position marks according to Claim 14, characterised in that the portion of predetermined length ($L_2$) of the target is delimited by the bar code (5) and the additional bar (or bars) (8, 10), this predetermined length ($L_2$) being defined by the distance separating the external edge of the end bar (6) of the bar code (5), situated on the opposite side to the additional bar or bars (8, 10) from the outer edge of the additional bar (8, 10) which is furthest from the bar code (5).

17. A unit for identifying one reference side of identical parallelepiped objects (13) and for detecting the said objects stored on at least one first tray (18) and intended to be transferred to at least one other tray by an automatic transfer device, characterised in that it comprises at least one detection device according to one of Claims 7 to 10 and at least one set of carriers of the detection marks according to one of Claims 11 to 16.

**Patentansprüche**

1. Verfahren zum Identifizieren einer Seitenfläche von identischen Gegenständen (13) mit Parallelepipedform und zum Auffinden der Position der Gegenstände, die mittels einer automatischen Transfervorrichtung von einer ersten Fläche (18) auf mindestens eine andere Fläche transferiert werden sollen, wobei jeder dieser Gegenstände einen Positionsmarkierungsträger (1) auf mindestens zwei planen aneinandergrenzenden Flügeln (2-3, 4) trägt, wobei jeder dieser Flügel mit einer optisch zu lesenden Zielmarkierung (5, 8, 10), deren einer Teil eine vorbestimmte Länge ($L_1$, $L_2$) besitzt, ausgestattet ist und auf einer der beiden benachbarten Seitenflächen (14, 15) des Gegenstandes (13) angebracht ist, wobei die eine Seitenfläche (15) eine große Seitenfläche ist, die von der Länge und Höhe des Gegenstandes begrenzt ist und die andere (14) eine kleine Seitenfläche ist, die durch die Breite und Höhe des Gegenstandes begrenzt ist, wobei die Gegenstände (13) auf jeder ersten Fläche (18) derart gestapelt sind, daß bei jedem von ihnen ein Flügel (2-3, 4) des entsprechenden Positionsmarkierungsträgers (1) im wesentlichen parallel zu einer Bezugsseite der ersten Fläche (18) verläuft, auf welcher der Gegenstand gestapelt ist, dadurch gekennzeichnet, daß man bei jedem Gegenstand (13)

— mindestens einmal den Teil vorbestimmter Länge ($L_1$, $L_2$) der Zielmarkierung (5, 8, 10) des im wesentlichen zur Bezugsseite der ersten Fläche (18) parallelen Flügels mit einem optischen Lesestrahl abtastet, der von einer Quelle (17) emittiert und mit konstanter Winkelgeschwindigkeit verschoben wird,

— die Dauer (T) des Abtastens des Teils vorbestimmter Länge ($L_1$, $L_2$) mißt,

— den Abstand (D), durch den die Quelle (17) von der entsprechenden Seitenfläche (14, 15) des Gegenstandes (13) beabstandet ist, als Funktion der vorbestimmten Länge ($L_1$, $L_2$), der konstanten Abtastgeschwindigkeit und der gemessenen Dauer (T) berechnet,

— und daß man außerdem die Fläche (14, 15) jedes Gegenstandes (13), die sich im wesentlichen parallel zur Bezugsseite der entsprechenden Fläche (18) befindet, durch optisches Lesen der Zielmarkierung (5, 8, 10) des entsprechenden Flügels (2-3, 4) des Markierungsträgers (1) dieses Gegenstandes (13) identifiziert, wobei die vorbestimmte Länge der Zielmarkierung eine für die Seite des Objekts spezifische Länge aufweist.

2. Verfahren nach Anspruch 1, dadurch gekennzeichnet, daß man mindestens als einen Teil der Zielmarkierung jedes Flügels (2-3, 4) des Markierungsträgers (1) eines Gegenstandes (13) einen Strichcode (5) einsetzt, der optisch gelesen die Identifizierung der Art des entsprechenden Objektes (13) ermöglicht, und daß man die Zielmarkierung im wesentlichen in Querrichtung bezogen auf die Richtung der Striche (6) des Strichcodes (5) abtastet.

3. Verfahren nach Anspruch 2, dadurch gekennzeichnet, daß man außerdem die Quelle (17) des optischen Lesestrahls in eine Richtung (20) verschiebt, deren Projektion auf die Seitenfläche (14, 15) der Gegenstände (13), die einen im wesentlichen zur Bezugsseite der entsprechenden Fläche (18) parallelen Flügel (2-3, 4) aufweisen, im wesentlichen parallel zur Richtung der Striche (6) des Strichcodes (5) der Zielmarkierung dieses Flügels verläuft, und daß man den Lesestrahl winkelig in einer zu dieser Projektion im wesentlichen senkrechten Ebene abtasten läßt.

4. Verfahren nach einem der Ansprüche 1 bis 3, dadurch gekennzeichnet, daß man bei jeder ersten Fläche (18) mit gestapelten Gegenständen

— zuerst die Quelle (17) des Abtaststrahls hinsichtlich derjenigen Seitenflächen (14, 15) der Gegenstände der oberen Lage der Fläche (18), die im wesentlichen fortlaufend sind, auf der Bezugsseite dieser Fläche (18), von einer der beiden senkrecht zur Bezugsseite verlaufenden Endseiten der ersten Fläche zur anderen verschiebt ;

— nacheinander die Position der entsprechenden Gegenstände (21 bis 25) bestimmt, dann, nach Transfer letzterer durch die automatische Transfervorrichtung

— die Quelle (17) erneut in analoger Weise hinsichtlich derjenigen der freien Seitenflächen (14, 15) der verbliebenen Gegenstände der oberen Lage verschiebt, die im wesentlichen parallel zur Bezugsseite der ersten Fläche (18) verlaufen und zu dieser Bezugsseite gerichtet sind,

— nacheinander die Position der entsprechenden übrigen Gegenstände (26-32) bestimmt, dann nach Transfer letzterer mittels der automatischen Transfervorrichtung

— auf analoge Weise bis zum Transfer aller Gegenstände der oberen Lage verfährt, danach

— die Quelle (17) in Richtung auf den Boden der ersten Fläche (18) um eine Höhe verschiebt, die der Höhe (H) einer Lage von Gegenständen entspricht und

— diesen Zyklus für die Gegenstände der neuen oberen Lage der ersten Fläche und dann anschließend bis zur letzten Lage der Gegenstände dieser ersten Fläche durchführt.

5. Verfahren nach Anspruch 4, dadurch gekennzeichnet, daß man bei jeder Verschiebung der Quelle (17) hinsichtlich der Gegenstände derselben Lage einer ersten Fläche (18)

— die Position des ersten Gegenstandes (21) dieser durch den Lesestrahl abgetasteten Lage bestimmt, nachdem die Zielmarkierung (2-3, 4) des Flügels in bezug auf diesen ersten Gegenstand mindestens zweimal nacheinander mit identischem Ergebnis optisch abgelesen worden ist,

— das Abtasten um ein vorbestimmtes Zeitintervall unterbricht, das der Zeit entspricht, welche von der Quelle (17) benötigt wird, um sich um eine Strecke zu verschieben, welche der Ausdehnung eines Flügels (2-3, 4) des Markierungsträgers (1) in Richtung (20) der Verschiebung der Quelle (17) entspricht,

— den Lesestrahl erneut abtasten läßt, bis man die Zielmarkierung des Flügels (2-3, 4) in bezug auf den zweiten Gegenstand (22) dieser Lage mindestens zweimal nacheinander mit identischem Ergebnis optisch gelesen hat,

— das Abtasten aufs neue für ein vorbestimmtes Zeitintervall unterbricht und so fortfährt, bis man die Lage des letzten Gegenstandes (25) dieser durch den Lesestrahl bei der Verschiebung der Quelle (17) abgetasteten Lage festgestellt hat.

6. Verfahren zum Auffinden der Position von identischen Gegenständen mit Parallelepipedform (13), die auf mindestens einer ersten Fläche (18) gestapelt sind, nach einem der Ansprüche 4 oder 5 und zum Steuern einer automatischen Transfervorrichtung, um diese Gegenstände auf mindestens eine andere Fläche zu transferieren, dadurch gekennzeichnet, daß man

— die nacheinander im Verlauf jeder Verschiebung der Quelle (17) in bezug auf den Gegenstand (13) derselben Lage einer ersten Fläche (18) bestimmten Positionen speichert,

— diese gespeicherten Positionen an die automatische Transfervorrichtung weiterleitet und

— den Transfer der entsprechenden Gegenstände steuert, indem man mit demjenigen Gegenstand oder denjenigen Gegenständen beginnt, dessen (deren) Seitenfläche(n) (14, 15), die den durch den Lesestrahl beim Verschieben der Quelle (17) abgetasteten Flügel (2-3, 4) aufweist, der Bahn der Quelle (17) am nächsten ist, und man mit dem Transfer derjenigen Gegenstände fortfährt, deren Seitenfläche, die den durch den Lesestrahl abgetasteten Flügel aufweist, der Bahn der Quelle am entferntesten ist.

7. Vorrichtung zum Identifizieren einer Seitenfläche von identischen Gegenständen (13) mit Parallelepipedform und zum Auffinden der Position dieser Gegenstände, die auf mindestens einer ersten Fläche (18) gestapelt sind und die mittels einer automatischen Transfervorrichtung zumindest zu einer anderen Fläche transferiert werden sollen, um das Verfahren nach einem der Ansprüche 1 bis 6 durchzuführen, dadurch gekennzeichnet, daß die Vorrichtung umfaßt :

— eine Zelle (17), die beim Abtasten auftretende Reflexe optisch liest und die mit einer Quelle für einen Laserstrahl, einer Vorrichtung zum Schwenken des Strahls mit einer konstanten Winkelgeschwindigkeit und einem Empfänger für den durch mindestens eine reflektierende Zielmarkierung (5, 8, 10) jedes Gegenstandes reflektierten Strahl ausgestattet ist,

— eine Zählvorrichtung, die gestartet und gestoppt wird durch den Empfänger beim Vorbeistreichen des emittierten Strahls über die Ränder eines Teils der Zielmarkierung und die die Dauer (T) des Abtastens dieses Teils mißt, das eine vorbestimmte Länge ($L_1$, $L_2$) aufweist, die für eine Seitenfläche des Objekts spezifisch ist,

— einen Rechner zur Ermittlung des Abstandes (D), durch den die Zelle (17) von der Zielmarkierung beabstandet ist, als Funktion der Winkelgeschwindigkeit des Abtastens, der vorbestimmten Länge ($L_1$, $L_2$) des auf der Zielmarkierung abgetasteten Teils und der Dauer (T) des Abtastens dieses Teils,

— eine Vorrichtung (20), um die Zelle (17) in Längsrichtung in bezug auf die Gegenstände einer Lage einer ersten Fläche (18) zu verschieben und

— eine Vorrichtung (35), um die Zelle (17) Schritt für Schritt in bezug auf die verschiedenen Lagen einer ersten Fläche (18) senkrecht zu verschieben, wobei die Zelle (17) ausgelegt ist, um die Seitenfläche des Gegenstandes durch optisches Lesen der Zielmarkierung zu identifizieren.

8. Vorrichtung nach Anspruch 7, dadurch gekennzeichnet, daß sie umfaßt :

— einen Vergleichsspeicher für die nacheinander von derselben Zielmarkierung (5, 8, 10) erhaltenen optischen Ablesungen,

— einen Rechner für die von der Zelle (17) beim Längsverschieben (20) durchlaufene Distanz, und

— einen Schalter für das. Abtasten, der das Abtasten unterbricht, wenn der Vergleichsspeicher mindestens zwei aufeinanderfolgende und identische optische Ablesungen der gleichen Zielmarkierung (5, 8, 10) erhalten hat, und der die Wiederaufnahme des Abtastens veranlaßt, wenn der Rechner für die von der Zelle (17) durchlaufene Distanz berechnet hat, daß sich letztere seit der vorherigen Abtastunterbrechung um eine vorgegebene Distanz verschoben hat.

9. Vorrichtung nach einem der Ansprüche 7 und 8, dadurch gekennzeichnet, daß sie eine Abdeckvorrichtung (19) aufweist, die den wirksamen Abtastwinkel des Strahls begrenzt.

10. Vorrichtung nach einem der Ansprüche 7 bis 9, dadurch gekennzeichnet, daß sie einen Zählschalter aufweist, der durch den Empfänger der Zelle (17) gesteuert wird, wobei dieser Zählschalter die Zählvorrichtung einschaltet, wenn der Empfänger die Ankunft des emittierten Strahls an einem Markierungsträger (1) feststellt, welcher mindestens eine optisch zu lesende Zielmarkierung (5, 8, 10) aufweist.

11. Positionsmarkierungsträger (1) zur Identifizierung einer Bezugsseite eines Gegenstandes (13) mit Parallelepipedform und zum Auffinden der Position des Gegenstandes, der auf mindestens einer ersten Fläche (18) gestapelt und mittels einer automatischen Transfervorrichtung zu einer anderen Fläche transferiert werden soll, wobei dieser Träger zur Durchführung des Verfahrens nach einem der Ansprüche 1 bis 6 eingesetzt werden kann, dadurch gekennzeichnet, daß er mindestens zwei plane aneinandergrenzende Flügel (2-3, 4) aufweist, die jeweils auf einer von zwei benachbarten Seitenflächen (14, 15) des Gegenstandes (13) angebracht werden sollen oder jeweils mit einer dieser beiden Seitenflächen verbunden sind, und von denen jeder mit einer optisch zu lesenden Zielmarkierung (5, 8, 10) ausgestattet ist, welche einen Teil vorbestimmter Länge ($L_1$, $L_2$) besitzt, durch deren Ablesung mittels eines durch eine Quelle (17) emittierten optischen Lesestrahls eine Bestimmung des Abstandes (D) ermöglicht wird, durch welchen die Quelle (17) von der Seitenfläche (14, 15) des Gegenstandes (13), die den Flügel trägt, dessen Zielmarkierung durch den Strahl abgetastet wird, beabstandet ist.

12. Markierungsträger zur Identifizierung und Positionsbestimmung nach Anspruch 11, dadurch gekennzeichnet, daß die Zielmarkung mindestens eine Identifikationsmarkierung (8, 10) der Seitenfläche (14, 15) des Gegendes (13) aufweist, auf der der entsprechende Flügel (2-3, 4) angebracht sein muß.

13. Markierungsträger zur Identifizierung und Positionsbestimmung nach einem der Ansprüche 11 oder 12, dadurch gekennzeichnet, daß die Zielmarkierung Identifikationsmarkierungen für den entsprechenden Gegenstand (13) in Form eines optisch zu lesenden Strichcodes (5) aufweist.

14. Markierungsträger zur Identifizierung und Positionsbestimmung nach den Ansprüchen 12 und 13 gemeinsam, dadurch gekennzeichnet, daß die Identifikationsmarkierung der Seitenfläche (14, 15) mindestens einen weiteren Strich (8, 10) aufweist, der zu denen der Zielmarkierung (5) analog ist und dazu parallel verläuft und der vom nächstgelegenen Strich (6) des Strichcodes (5) durch einen Abstand (9, 12) beabstandet ist, welcher breiter ist als derjenige aller anderen Abstände (7), welche zwei benachbarte Striche (6) des Strichcodes (5) trennen, wobei die beiden Seitenflächen (14, 15) des Gegenstandes (13), auf denen sich die beiden Flügel befinden müssen, durch eine unterschiedliche Anzahl zusätzlicher Striche (8, 10) identifiziert werden.

15. Markierungsträger zur Identifizierung und Positionsbestimmung nach einem der Ansprüche 13 oder 14, dadurch gekennzeichnet, daß der Strichcode (5) den Teil vorbestimmter Länge ($L_1$) der Zielmarkierung darstellt, dessen Länge ($L_1$) durch den Abstand definiert ist, der die beiden Außenränder der beiden Endstriche (6) des Strichcodes (5) trennt.

16. Markierungsträger zur Identifizierung und Positionsbestimmung nach Anspruch 14, dadurch gekennzeichnet, daß der Teil vorbestimmter Länge ($L_2$) der Zielmarkierung durch den Strichcode (5) und den (die) zusätzlichen Strich(e) (8, 10) begrenzt ist, wobei diese vorbestimmte Länge ($L_2$) durch den Abstand definiert ist, der den Außenrand des Endstrichs (6) des Strichcodes (5) auf der dem oder den zusätzlichen Strich(en) (8, 10) gegenüberliegenden Seite vom äußeren Rand desjenigen zusätzlichen Strichs (8, 10) trennt, der vom Strichcode (5) am weitesten entfernt ist.

17. Einheit zur Identifizierung einer Bezugsseite identischer Gegenstände (13) mit Parallelepipedform und zum Auffinden der Gegenstände, die auf mindestens einer ersten Fläche (18) gestapelt sind und die mittels einer automatischen Transfervorrichtung zu mindestens einer anderen Fläche transferiert werden sollen, dadurch gekennzeichnet, daß sie mindestens eine Vorrichtung zum Auffinden nach einem der Ansprüche 7 bis 10 und mindestens einen Satz von Markierungsträgern gemäß einem der Ansprüche 11 bis 15 aufweist.

FIG. 1

FIG. 2

FIG. 3

FIG. 4

FIG. 5